# EUROPÄISCHE PATENTSCHRIFT

(11) **EP 3 883 991 B1**
(45) Veröffentlichungstag und Bekanntmachung des Hinweises auf die Patenterteilung: **20.11.2024**
(21) Anmeldenummer: 19809790.9
(22) Anmeldetag: 25.11.2019
(51) Int. Cl.: C08J 3/24, C08J 7/04, C08J 7/056, C08L 29/04, C08J 9/224, C08J 9/232

(54) **VERFAHREN ZUM VERSCHWEISSEN VON SCHAUMSTOFFPARTIKELN**
METHOD FOR WELDING FOAM PARTICLES
PROCÉDÉ DE SOUDAGE DE PARTICULES DE MOUSSE

(30) Priorität: 24.11.2018 DE 102018009255
(43) Veröffentlichungstag der Anmeldung: 29.09.2021
(73) Patentinhaber: Kurtz GmbH & Co. KG, 97892 Kreuzwertheim (DE); Siegel, Rolf, 97076 Würzburg (DE)
(72) Erfinder: SIEGEL, Rolf, 97076 Würzburg (DE)
(74) Vertreter: HGF
(86) Internationale Anmeldenummer: PCT/EP2019/082468
(87) Internationale Veröffentlichungsnummer: WO 2020/104702

(56) Entgegenhaltungen:
- EP-A1- 3 053 947
- WO-A1-2008/043700
- WO-A2-2012/103876
- WO-A2-2018/100154
- DE-A1- 102007 035 560

## Beschreibung

Die vorliegende Erfindung betrifft Verfahren zum Verschweißen von mit einer Oberflächenmodifikation bzw. -modifizierung ausgestatteten Schaumstoffpartikeln mittels elektromagnetischen Wellen.

Bei der Herstellung von geformten Partikelschaumstoffteilen aus Schaumstoffpartikeln werden Schaumstoffpartikel unter Wärmeeinwirkung miteinander verschmolzen. Die hierbei notwendige Wärme kann unter anderem mittels elektromagnetischer Wellen auf die miteinander zu verschmelzenden Schaumstoffpartikel übertragen werden. Zur Verbesserung der Übertragung von Wärme auf Schaumstoffpartikel können zusätzliche, Wärme übertragende Stoffe notwendig sein.

Aus der WO 2013/050581 A1 geht ein Verfahren zur Herstellung von Partikelschaumstoffteilen hervor, bei welchen eine Mischung aus Schaumstoffpartikeln und dielektrischer Transferflüssigkeit mittels elektromagnetischer Wellen erhitzt wird, um die Schaumstoffpartikel zu einem Partikelschaumstoffteil zu verschmelzen. Als elektromagnetische Wellen werden Radiowellen oder Mikrowellen verwendet. Das Material der Schaumstoffpartikel ist aus Polypropylen (PP) ausgebildet.

Aus der US 3,060,513 geht ein Verfahren zum Sintern von feuchten thermoplastischen Schaumstoffpartikel hervor. Die Partikel werden dielektrisch erhitzt und gleichzeitig in der Form komprimiert. Es werden elektromagnetische Wellen bei einer Frequenz von etwa 2 bis 1000 MHz angelegt.

Ein ähnliches Verfahren ist in der US 3,242,238 beschrieben, bei welchen Schaumstoffpartikel mit einer wässrigen Lösung befeuchtet werden und einem elektromagnetischen Feld mit einer Frequenz von etwa 5 bis 100 MHz ausgesetzt sind.

In der GB 1,403,326 ist ein Verfahren zum Verschweißen von expandierbaren Polystyrolschaumstoffpartikeln beschrieben, bei welchem die Partikel mit einer wässrigen Lösung befeuchtet werden und einem elektromagnetischen Feld von 5 bis 2000 MHz ausgesetzt werden.

Aus der WO 01/64414 A1 geht ein weiteres Verfahren hervor, bei dem Polymerpartikel aus Polyolefinen, die mit einem flüssigen Medium benetzt sind, mit elektromagnetischen Wellen, insbesondere Mikrowellen erhitzt werden. Hierbei wird die Temperatur im Formwerkzeug mittels Steuern des darin befindlichen Druckes geregelt.

Die WO 2008/043700A1 beschreibt beschichtete Schaumstoffpartikel und Verfahren zur Herstellung von feuerbeständigen Partikelschaumstoffkörpern. DE 10 2007 035 560 A1 beschreibt die Verwendung beschichteter Partikeln zur Herstellung von expandiertem Polystyrol (EPS).

Bei den oben erläuterten Verfahren werden jeweils feuchte Schaumstoffpartikel mit elektromagnetischen Wellen erhitzt, wobei die elektromagnetische Energie von der Flüssigkeit absorbiert und auf die Partikel übertragen wird.

Aus der US 5,128,073 gehen thermoplastische Partikel hervor, die mit einem Hochfrequenzenergie absorbierenden Material beschichtet sind. Diese Partikel können mit elektromagnetischen Wellen erhitzt werden, wobei die Beschichtung die elektromagnetische Energie aufnimmt und in Form von Wärme an die Schaumstoffpartikel abgibt. Zum Verschweißen der Schaumstoffpartikel werden elektromagnetische Wellen im Bereich vom 40 MHz bis 2450 MHz verwendet. Die beschriebene Beschichtung erfolgt durch Vermengung mit hohe Frequenzen absorbierenden organischen Materialien. Als Beispiele werden genannt: Alkanolamine wie Triethanolamin, Tripropanolamin, Monohydroxyamine, Dihydroxyamine; Alkylglykole wie 2-Hydroxyethylether; Polyalkylenglykole wie Polyethylenglykol; sowie wässerige Lösungen derselben. Den Ausführungsbeispielen zufolge werden die jeweiligen Beschichtungsmaterialien entweder mit oder ohne Lösungsmittel durch Vermengen mit Schaumstoffpartikeln auf diese aufgetragen, woraufhin das jeweilige Gemenge mittels Strahlung in einer formgebenden Umgebung erwärmt werden.

Die vorgenannten Verfahren sind zum Teil seit Jahrzehnten bekannt. Dennoch konnten sie sich bisher in der Praxis nicht durchsetzen. Hierfür gibt es unterschiedliche Gründe. Bei Labormustern funktionieren diese Verfahren sehr gut. Der Übergang in die industrielle Produktion ist jedoch schwer zu bewerkstelligen und zumindest bis vor kurzem nicht geglückt. Ein wesentlicher Grund hierfür ist, dass die Wärme nicht immer gleichmäßig in die Schaumstoffpartikel eingebracht werden kann, mit der Folge einer ungleichmäßigen Verschweißung im Partikelschaumstoffteil.

In jüngerer Zeit konnte die Effizienz und Zuverlässigkeit der Verschweißung von Schaumstoffpartikeln mittels elektromagnetischer Strahlung durch die Fortentwicklung hierzu verwendeter Formgebungswerkzeuge verbessert werden. DE 10 2016 123 214 A1 und WO 2018/10054 beschreiben entsprechende Vorrichtungen. Daraus geht auch hervor, dass die Notwendigkeit eines Wärmeübertragungsmediums von den Eigenschaften der zu verschweißenden Partikel abhängt.

Partikelschaumstoffteile können demnach beispielsweise aus Schaumstoffpartikeln auf Basis von Polyurethan (eTPU) hergestellt werden. Polyurethan weist einen dielektrischen Verlustfaktor D von 0,2 bei einer elektromagnetischen Strahlung mit einer Frequenz von 1 MHz auf. Der dielektrische Verlustfaktor von Polypropylen (PP) bei einer elektromagnetischen Strahlung mit einer Frequenz von 1 MHz beträgt hingegen lediglich nur 0,00035. Die Absorptionsfähigkeit von Polyurethan ist daher wesentlich höher als die von Polypropylen. Hierdurch ist es möglich, ohne zusätzliche Wärme übertragende Stoffe, insbesondere ohne wässrigen Lösungen, die zum Verschweißen der Schaumstoffpartikel notwendige Wärme in die Schaumstoffpartikel einzubringen, da die Schaumstoffpartikel selbst die elektromagnetischen Wellen absorbieren.

Anstelle von Schaumstoffpartikeln auf Basis von Polyurethan können auch Schaumstoffpartikel aus expandierbaren Thermoplasten auf Basis von Polyether-Block-Amid (ePEBA), auf Basis von Polylactat (PLA), auf Basis von Polyamid (ePA), auf Basis von Polybutylenterephthalat (ePBT), auf der Basis von Polyester-Ether-Elastomer (eTPEE) oder auf Basis von Polyethylenterephtalat (ePET) verwendet werden.

Diese Materialien weisen jeweils funktionelle Gruppen (Amidgruppe, Urethangruppe bzw. Estergruppe) auf, welche ein Dipolmoment bewirken. Diese funktionellen Gruppen sind dafür verantwortlich, dass die Moleküle Radiofrequenz-Strahlung (RF-Strahlung) absorbieren. Daher sind auch andere thermoplastische Kunststoffe, welche derartige ein Dipolmoment verursachende funktionelle Gruppen aufweisen, geeignet mit RF-Strahlung verschweißt zu werden.

Es können aber auch Schaumstoffpartikel auf Basis von ePP (expandierbares Polypropylen) oder ePS (expandierbares Polystyrol) zu Partikelschaumstoffteilen verschweißt werden. Da diese Materialien elektromagnetische Strahlung nur in einem sehr geringen Maße absorbieren, ist es in diesen Fällen notwendig, ein dielektrisches Wärmeübertragungsmedium hinzuzugeben, wie z.B. Wasser.

Allgemein bestehen Schaumstoffpartikel aus sogenannten niederenergetischen Kunststoffen, d. h. Kunststoffen , die wenigsten eines der folgenden Merkmale aufweisen:
- die freie Oberflächenenergie liegt unter 40 mN/m,
- der Kontaktwinkel von Wasser ist größer als 45°, d.h. die Wasserbenetzbarkeit ist gering oder fehlt, das Material ist hydrophob,
- sie sind aus wässriger Phase heraus nicht färbbar,
- sie weisen einen Oberflächenwiderstand von mehr als 106 W auf.

Als nicht-limitierende Beispiele seien Kunststoffe aus den Stoffklassen der Aramide, Polyester, Polyamide, Polyacrylate, Polyacrylnitrile, (thermoplastische) Polyurethane, (per)fluorierte Polyolefine, z.B. Polytetrafluorethylen oder Polyvinyliden(di)fluorid, Polysulfone, Polyimide, Polyolefine, Kohlenstoff etc. sowie Co- oder Terpolymeren davon, genannt.

Unter der Bezeichnung "Partikel" werden im Folgenden aus o. g. Polymeren hergestellte Formkörper verstanden, die aufgrund ihrer Ausbildung in erster Linie durch ihren Durchmesser charakterisiert sind, wobei dieser sowohl im Nanometer- als auch Zentimeter-Bereich liegt. Zusätzlich haben sie eine (rotations)symmetrische oder irreguläre Gestalt. Die Oberfläche der Formkörper ist eben, rau oder zerklüftet bzw. weisen diese Merkmale in Kombination auf. Die Formkörper bestehen aus porenfreiem Polymer oder aus offen- und/oder geschlossen-porigem Polymer.

Die Porosität der Polymere wird auch durch den Begriff "expanded" beschrieben, beispielsweise steht ePET für expanded Polyethylenterephthalat und eTPU für expanded thermoplastisches Polyurethan.

Im weiteren werden Formkörper mit derartigen Eigenschaften als "Partikel" bezeichnet. Insbesondere im Zusammenhang mit Oberflächenmodifikation(en), wird auch der Begriff "Material" verwendet.

Aus nieder-energetischen Kunststoffen hergestellte Partikel, insbesondere solche aus Polyolefinen oder Polyestern, weisen eine Reihe von Nachteilen auf:
- die Materialien laden sich leicht elektrostatisch auf, wodurch z.B. die Handhabbarkeit und Weiterverarbeitbarkeit erschwert wird,
- die Materialien sind nicht wasserbenetzbar, was z.B. ihren Einsatz als Filtermaterial für wässrige Medien einschränkt,
- die Materialoberflächen weisen keine oder nur mit (chemisch) drastischen Mitteln aktivierbare funktionelle Gruppen auf.

Für den Einsatz als Füllmaterial für Verbundwerkstoffe ist dies unvorteilhaft: Selbst bei Verwendung eines reaktiven Epoxy-Harzes als Matrixmaterial, bleibt der Kontakt zwischen Füllmaterial und Matrix ein rein physikalisch-mechanischer. Wenn in diesen Bereich Feuchtigkeit eindringt, kann dies zu Delaminationen führen. Auch eine Oberflächenfärbung direkt aus wässriger Phase heraus ist nicht möglich. Für den Einsatz im Zusammenhang mit dem Verschweißen von Schaumstoffpartikeln mittels elektromagnetischen Wellen sind insbesondere die hydrophoben Eigenschaften der eingesetzten Schaumstoffpartikel unvorteilhaft, weil sie eine gleichmäßige Benetzbarkeit mit wässrigen Wärmeübertragungsmedien erheblich erschweren, was dazu führen kann, dass bei der Herstellung in einem Formgebungswerkzeug an manchen Stellen viel und an anderen Stellen wenig Wärme auf die Schaumstoffpartikel übertragen wird, was wiederum zu minderwertigen Partikelschaumstoffteilen führen kann, die nicht überall gleichmäßig verklebt sind.

Das vorstehend erwähnte lose Vermengen von Schaumstoffpartikeln mit Hochfrequenzenergie absorbierenden Stoffen hat den Nachteil, dass derartige Stoffe nicht dauerhaft mit den Partikeln verbunden sind.

Ein in EP 2 670 906 bzw. WO 2012/103876 beschriebenes Verfahren zur Oberflächenmodifikation mit Hilfe von wässriger Lösung von silanol(at)gruppen-haltigem Polyvinylalkohol betrifft ausschließlich textile Substrate.

Der Erfindung liegt die Aufgabe zugrunde, Verfahren zum Verschweißen von expandierbaren thermoplastischen Schaumstoffpartikeln mittels elektromagnetischen Wellen so weiter zu entwickeln, dass eine möglichst gleichmäßige Verschweißung bei der Herstellung von Partikelschaumstoffteilen aus Schaumstoffpartikeln letztere gleichmäßig verschweißt werden.

Die Aufgabe wird gelöst durch Verfahren zum Verschweißen von Schaumstoffpartikeln mit elektromagnetischen Wellen, wobei Schaumstoffpartikel mit einer Oberflächenmodifikation in einem Formwerkzeug mit elektromagnetischen Wellen verschweißt werden, wobei die Oberflächenmodifikation dadurch hergestellt wird, dass die Schaumstoffpartikel mit einer Lösung, die Polymere enthält, die zur Ausbildung von intra- oder intermolekularen kovalenten Bindungen befähigt sind, unter den hierzu erforderlichen Bedingungen kontaktiert werden.

Durch die Art der Herstellung der Oberflächenmodifikation vermittels Ausbildung von intra- und/oder intermolekularen kovalenten Bindungen entsteht eine netzartige Beschichtung, welche die Schaumstoffpartikel ganz oder teilweise umhüllt, so dass die Oberflächenmodifikation dauerhaft mit dem Partikel verbunden ist, auch wenn keine kovalente Bindung zum Schaumstoffpartikel ausgebildet wird.

Bei erfindungsgemäßen Verfahren kann die Oberflächenmodifikation hydrophil ausgebildet sein.

Hydrophile Oberflächenmodifikationen sind vorteilhaft, weil sie die Benetzbarkeit von Schaumstoffpartikeln mit Wärmeübertragungsmedien wie Wasser oder wässerigen Lösungen verbessern, wodurch wiederum die Gleichmäßigkeit der Benetzung verbessert wird, was eine gleichmäßigere Verschweißung der Schaumstoffpartikel befördert. Die Hydrophilie lässt sich über das Vorsehen geeigneter hydrophiler Gruppen in den für die Herstellung der Oberflächenmodifikation verwendeten Polymeren einstellen. Der Grad der Hydrophilie kann maßgeschneidert werden, indem Art und/oder Anzahl der verwendeten hydrophilen Gruppen variiert wird.

Die dauerhafte Funktionalisierung der Materialoberflächen erlaubt die ionogene und/oder kovalente Bindung von wasserlöslichen Chemikalien, z. B. von Farbstoffen, metall-bindenden Liganden oder biologisch aktiven Verbindungen, verbessert die Wasserbenetzbarkeit, reduziert dadurch die elektrostatische Aufladbarkeit, verbessert das Wasseraufnahme- und - haltevermögen, erlaubt einen kapillaren Wassertransport etc.. Stabil auf der Materialoberfläche verankerte funktionelle Gruppen ermöglichen zudem eine kovalente Bindung zwischen Partikel und chemisch reaktiven Matrices, dadurch weisen Verbundwerkstoffe eine verbesserte Delaminationsresistenz auf.

Bei erfindungsgemäßen Verfahren können die Schaumstoffpartikel mit Oberflächenmodifikation mit einer wässrigen Lösung benetzt werden, bevor sie in dem Formwerkzeug mit elektromagnetischen Wellen verschweißt werden.

Auf diese Weise kann beim Verschweißen Wasser als Medium zur Absorption elektromagnetischer Wellen eingesetzt werden, wobei dies in Kombination mit einer hydrophilen Oberflächenmodifikation, welche die Benetzbarkeit eines ansonsten hydrophoben Schaumstoffpartikels verbessert, besonders vorteilhaft und damit bevorzugt ist.

Bei den in den erfindungsgemäßen Verfahren verwendeten Schaumstoffpartikeln kann die Herstellung der Oberflächenmodifikation als zusätzlichen Schritt die Entfernung des hierbei verwendeten Lösungsmittels umfassen.

Das Entfernen von Lösungsmittel nach der Oberflächenmodifikation aber vor dem Verschweißen ermöglicht eine Handhabung der Schaumstoffpartikel mit Oberflächenmodifikation ohne Lösungsmittel. Lösungsmittelfreie, d.h. im Wesentlichen trockene Schaumstoffpartikel können länger gelagert werden, als mit Lösungsmittel versehene Schaumstoffpartikel. Letztere können grundsätzlich mit oder ohne Wärmeübertragungsmedium mittels elektromagnetischen Wellen verschweißt werden. Die Entfernung des Lösungsmittels, das bei der Herstellung verwendet wurde, ermöglicht die Benetzung mit einem Wärmeübertragungsmedium, das sich von dem bei der Herstellung der Oberflächenmodifikation verwendeten Lösungsmittel unterscheidet. Das ist insbesondere dann vorteilhaft, wenn Lösungsmittel und Wärmeübertragungsmedium nicht miteinander harmonieren.

Bei erfindungsgemäßen Verfahren kann die Oberflächenmodifikation zur Verbesserung der Absorption elektromagnetischer Strahlen insbesondere im Radiofrequenzbereich polare Gruppen aufweisen.

Hierdurch kann die Absorptionsfähigkeit an der Partikeloberfläche verbessert werden, was den Wärmeeintrag an der Partikeloberfläche verbessert und so dem gleichmäßigen Verschweißen förderlich ist.

Entsprechende polare Gruppen können ausgewählt sein aus: Ester-, Acetal- oder Urethangruppe.

Die zur Ausbildung von intra- oder intermolekularen kovalenten Bindungen befähigten Polymere weisen funktionelle Gruppen auf, ausgewählt aus Sulfonsäure-, Thio-, Ammonium-, Carboxyl- bzw. Silanolgruppen, die Bestandteil von Polyvinylalkohol, Polyvinylpyrrolidon sind.

Die genannten funktionellen Gruppen ermöglichen den Polymeren, deren Bestandteil sie sind, die Ausbildung von intra- oder intermolekularen kovalenten Bindungen, auf einfache Weise, wobei grundsätzlich auch andere funktionelle Gruppen und Polymere möglich sind.

Bevorzugt werden die Schaumstoffpartikel mit einer Oberflächenmodifikation versehen, indem sie mit einer wässerigen Carboxyl- oder Silanolgruppen-haltigen Polyvinylalkohol-Lösung kontaktiert werden wobei der pH-Wert der wässerigen Carboxyl- oder Silanolgruppen-haltigen Polyvinylalkohol-Lösung zwischen 2 und 5 liegt, und wobei die wässerige Carboxyl- oder Silanolgruppen-haltigen Polyvinylalkohol-Lösung gegebenenfalls weitere Substanzen, die die Oberflächenspannung und/oder die Viskosität der Lösung beeinflussen, umfasst.

Entsprechend modifiziere Polyvinylalkohole eignen sich besonders gut zur Vernetzung, verfügen über hydrophile Gruppen in Form von Hydroxyl- (-OH) gruppen, sowie herstellungsbedingt gegebenenfalls Acetyl-(-OOC-CH₃) gruppen, die polar sind und zudem weitere Modifikationen ermöglichen.

Die Untergrenze der Konzentration der Carboxyl- oder Silanolgruppen-haltigen Polyvinylalkohol-Lösung kann 0,001, 0,01, 0,5 oder 1 % (w/v) betragen, die Obergrenze 40 % (w/v), 10% (w/v), 2% (w/v), oder 1% (w/v).

Hierbei und im Folgenden bedeutet die jeweilige Konzentrationsangabe "% (w/v)" das gleiche wie "g/100 ml", d. h. 1% (w/v) bedeutet 1 g/100 ml, 2% (w/v) bedeutet 2 g/100 ml etc.

Als besonders vorteilhaft haben sich Konzentrationen von 1% (w/v) herausgestellt. Höhere Obergrenzen können vorteilhaft sein, wenn es darum geht, Oberflächenmodifikationen mit größerer Schichtdicke bereitzustellen. Das kann vorteilhaft sein, beispielsweise um die Konzentration bestimmter, an der Oberfläche oder deren Nähe verorteter funktioneller Gruppen zu erhöhen. Niedrigere Konzentrationen können vorteilhaft sein, wenn es darum geht, Oberflächenmodifikationen mit geringerer Schichtdicke bereitzustellen. Letzteres ist insbesondere dann vorteilhaft, wenn zu große Schichtdicken einer Verschweißung der Partikel untereinander entgegenwirken würden.

Mit OH-Gruppen versehene Oberflächenmodifikationen können durch kovalente Bindung von wasserlöslichen Substanzen an die dort vorhandenen Hydroxy(-OH)gruppen mittels Ester-, Acetal-, Urethan- oder Etherbindung weiter modifiziert sein.

Auf diese Weise können die zum Verschweißen verwendeten Partikel durch Vorsehen weiterer geeigneter Modifikationen "maßgeschneidert" sein. Zum Beispiel können auf diese Weise weitere elektromagnetische Strahlung absorbierende Gruppen in der Nähe der Partikeloberfläche eingeführt werden, und/oder die Hydrophilie der Partikeloberfläche kann weiter modifiziert werden, und/oder es wird so ermöglicht, Partikel einzufärben und dergleichen mehr.

In erfindungsgemäßen Verfahren können die Schaumstoffpartikel bestehen aus: Polyurethan (ePU), expandierbaren Thermoplasten auf Basis von Polyether-Block-Amid (ePEBA), auf Basis von Polylactat (PLA), auf Basis von Polyamid (ePA), auf Basis von Polybutylenterephthalat (ePBT), auf der Basis von Polyester-Ether-Elastomer (eTPEE), auf Basis von Polyethylenterephtalat (ePET), oder aus expandierbarem Polyethylen (ePE), expandierbarem Polypropylen (ePP) oder expandierbarem Polystyrol (ePS).

Diese Materialien sind besonders bevorzugte Materialien für Schaumstoffpartikel.

Die in erfindungsgemäßen Verfahren verwendeten elektromagnetischen Wellen sind vorzugsweise elektromagnetische RF-Wellen. Die elektromagnetischen RF-Wellen weisen vorzugsweise eine Frequenz von zumindest 30 KHz bzw. zumindest 0,1 MHz, insbesondere zumindest 1 MHz bzw. zumindest 2 MHz und vorzugsweise zumindest 10 MHz auf.

Die elektromagnetischen RF-Wellen weisen vorzugsweise eine Frequenz von maximal 300 MHz auf.

Der Generator zum Erzeugen von elektromagnetischen Wellen erzeugt vorzugsweise elektromagnetische Wellen mit einer Amplitude von zumindest 10³ V und insbesondere zumindest 10⁴ V. Handelsübliche Generatoren erzeugen RF-Wellen mit einer Frequenz von 27,12 MHz.

Die elektromagnetischen Wellen können auch Mikrowellen im Frequenzbereich von 300 MHz bis 300 GHz sein.

Im Folgenden wird die Erfindung unter Bezugnahme auf die Figuren und Ausführungsbeispiele näher erläutert.

Der hier verwendete Begriff "Oberflächenmodifizierung" oder "Oberflächenmodifikation" umschreibt, dass sich die Oberflächen von nicht-oberflächen-modifizierten Materialien von der von oberflächen-modifizierten Materialien in wenigstens einem der folgenden Punkte unterscheiden:
- in den Ergebnissen der Oberflächenanalytik, z.B. mittels ESCA (Electron Spectroscopy for Chemical Analysis) oder SIMS (Secondary Ion Mass Spectroscopy),
- in der Wasserbenetzbarkeit,
- in der Elektrostatik,
- in der chemischen Reaktivität, z.B. in der Färbbarkeit mit wasserlöslichen Farbstoffen aus wässriger Phase heraus.

Aus nieder-energetischen Kunststoffen hergestellte Partikel können wie in EP 2 670 906 beschrieben oberflächen-modifiziert werden. Vorteilhaft können weitere Verbindungen zur Oberflächenmodifizierung eingesetzt werden.

Erfindungsgemäß erfolgt die Oberflächenmodifikation von aus nieder-energetischen Kunststoffen hergestellten Partikeln dadurch, dass man sie mit einer Lösung, die Polymere enthält, die zur Ausbildung von kovalenten inter- und intramolekularen Bindungen befähigt sind, bei den hierzu erforderlichen Bedingungen, wie Lösemittel (gemisch), pH, Temperatur, Druck, Energieeintrag, kontaktiert und das Lösemittel wieder entfernt.

Polymere, die zur Ausbildung von kovalenten inter- und intramolekularen Bindungen befähigt sind, besitzen zusätzliche funktionelle Gruppen, Sulfonsäure-, Thio-, Ammonium-, Carboxyl- oder Silanol-Gruppen, die Bestandteil von Polyvinylalkohol (PVA), Polyvi nylpyrrolidon sind. Als Beispiele seien carboxylgruppenhaltiger Polyvinylalkohol oder silanolgruppenhaltiger Polyvinylalkohol genannt. Diese mit Carboxyl- bzw. Silanolgruppen ausgestatteten Polyvinylalkohole sind bei Kuraray Europe GmbH, Hattersheim als KURARAY POVAL^{™} K (neue Produktbezeichnung: KURARAY POVAL^{™} 25-88 KL), bzw. KURARAY POVAL^{™} R (neue Produktbezeichnung: KURARAY POVAL^{™} 25-98 R) kommerziell erhältlich. In diesem Zusammenhang wird auf die entsprechenden aktuellen Datenblätter der Firma verwiesen.

Zur dauerhaften Oberflächenmodifizierung werden bevorzugt wässrige Lösungen von carboxyl- bzw. silanolgruppen-haltigem Polyvinylalkohol eingesetzt. Die eingesetzte Konzentration des Polymeren richtet sich insbesondere nach dem späteren Verwendungszweck der Partikel bzw. des daraus hergestellten Produkts und kann zwischen 0,001% (w/v) und 40% (w/v) variieren, in der Regel liegen die Konzentrationen zwischen 0,01% (w/v) und 10% (w/v), bevorzugt 0,5 bis 2% (w/v), besonders bevorzugt 1% (w/v). Das Herstellen derartiger Lösungen ist bekannt, siehe z.B. oben erwähnte Datenblätter.

Diesen Polymer-Lösungen können weitere, die Oberflächenspannung von Wasser herabsetzende Substanzen, wie beispielsweise nieder-aliphatische Alkohole, Tenside, Netzmittel zugesetzt sein. Verbindungen, die die Viskosität der Lösung modifizieren, wie zum Beispiel pyrogene Kieselsäure oder Metallsalze, können ebenfalls Bestandteil der Lösung sein. Deren, dem Fachmann geläufige Auswahl erfolgt im Hinblick auf den späteren Verwendungszweck der oberflächen-modifizierten Materialien, der Kompatibilität mit dem gelösten zur Ausbildung von kovalenten intra- und intermolekularen Bindungen befähigten Polymer, den zu modifizierenden Materialtypen und Materialeigenschaften, den Kontaktierungs- und Trocknungsbedingungen.

Der pH der eingesetzten Polymer-Lösung richtet sich nach der Reaktivität des eingesetzten Polymeren, bei carboxyl- und silanolgruppen haltigen Polyvinylalkohol liegt er zur Ausbildung von Ester- bzw. Siloxan-Bindungen vorzugsweise im Sauren, bei 3 ± 1.

Die Temperatur der eingesetzten Polymer-Lösung kann zwischen 3°C und 95°C liegen, vorzugsweise liegt sie zwischen 15 und 65°C, ganz bevorzugt bei Raumtemperatur.

Die nieder-energetischen Materialien werden mit einer Lösung kontaktiert, die Polymere enthält, die zur Ausbildung inter- und intramolekulares Verbindungen befähigt ist. Der Begriff "Kontakieren" beschreibt hier, dass die gesamte oder bestimmte Teile der Oberfläche des nieder-energetischen Materials in die Lage versetzt wird, mit den gelösten Stoffen in der Lösung in physikalisch-chemische Wechselwirkungen zu treten und umfasst auf molekularer Ebene Begriffe wie Physisorption und Chemiesorption und auf produktionstechnischer Ebene Begriffe wie in-innigen-Kontakt-bringen, beschichten, umhüllen, lackieren, benetzen, imprägnieren, besprühen, bestreichen, (ein)tauchen, etc..

Die Kontaktierung kann entweder manuell oder inline unter Zuhilfenahme bekannter Hilfsmittel und bei Produktionsgeschwindigkeit erfolgen.

Die Kontaktierungsdauer der nieder-energetischen Materialien mit der Polymer-Lösung liegt im Bereich von Sekunden und mehreren Tagen und wird jeweils unter Berücksichtigung der eingesetzten Polymer-Konzentration, des späteren Einsatzzwecks des Materials, dessen Eigenschaften, wie Texturierung, Kompaktheit, Dichte etc. und auch ökonomischen Gesichtspunkten ermittelt und optimiert.

Nach dem die nieder-energetischen Materialien mit der Polymer-Lösung kontaktiert wurden, wird das Lösemittel, vorzugsweise Wasser, gegebenenfalls entfernt, was üblicherweise durch Trocknung der mit Polymer-Lösung benetzten Materialien erfolgt. Die Trocknungstemperaturen können zwischen 1°C und über 170°C liegen. Sie werden von Fall zu Fall, unter Berücksichtigung des späteren Einsatzzwecks und den Eigenschaften des eingesetzten Materials, festgelegt. Bevorzugt liegen sie bei Raumtemperatur, besonders bevorzugt zwischen 30 und 70°C und ganz besonders zwischen 70 und 130°C.

Der Grad der eventuellen Trocknung richtet sich nach dem späteren Einsatzzweck der Materialien, so dass diese eine Restfeuchte zwischen 0% und 40%, bezogen auf nichtoberflächenmodifizierte Materialien, aufweisen können.

Der Nachweis für das dauerhafte Vorhandensein von funktionellen Gruppen, erfolgt vorteilhaft mit wasserlöslichen, zur kovalenten Bindung befähigten (Additions-) Farbstoffen. Beispielsweise eignet sich zum Nachweis von Hydroxylgruppen simplicol^{®} der Firma Brauns-Heitmann, Warburg. Der zur dauerhaften Färbung von Baumwolle entwickelte Farbstoff kann auch nach mehrmaligen Waschen mit heißem Wasser nicht abgewaschen werden, was als Beweis für die Stabilität der Oberflächenmodifikation gewertet wird.

Es wird davon ausgegangen, dass die oben beschriebene Kontaktierung und die anschließende Trocknung bewirkt, dass sich die zur Ausbildung von kovalenten inter- und intramolekularen Bindungen befähigten Polymere mit fortschreitender Verdunstung des Lösemittel Wasser zunächst auf der Oberfläche der Partikel anreichern. Im Falle von Carboxylgruppenhaltigem Polyvinylalkohol kommt es bei fortschreitender Verdunstung des Lösemittels zu einer Reaktion, bei der die Carboxyl- und Hydroxylgruppen unter Ausbildung von Esterbindungen vorwiegend intermolekular miteinander reagieren. Im Falle von Silanolgruppen-haltigem Polyvinylalkohol reagieren bei fortschreitender Verdunstung dann die Silanolgruppen (durch Kondensationsreaktion und unter Wasserabspaltung vorwiegend intermolekular) miteinander. In beiden Fällen entsteht ein die Partikeloberfläche umhüllendes und fest an dieser haftendes Riesenmolekül. Durch gezielte Einstellung der Konzentration der Carboxyl- bzw. Silanolgruppen-haltigen Polyvinylalkohol-Lösung lässt sich erreichen, dass sich sowohl dünne, möglicherweise auch monomolekulare Schichten auf der Oberfläche aufbringen lassen, aber auch dicke Schichten, die die einzelnen Partikel fest miteinander verbinden oder auch Lücken (Zwickel) zwischen den Partikeln verschließen.

Die Vernetzung setzt aber auch ohne Entfernung des Lösungsmittels schon ein. Darum ist es nicht notwendig, das Lösungsmittel zu entfernen. Insbesondere wenn das Lösungsmittel zugleich als Wärmeübertragungsmedium dienen kann, kann es vorteilhaft sein, das Lösungsmittel nicht oder nicht vollständig zu entfernen.

Im Falle des Einsatzes von carboxyl- bzw. silanolgruppen-haltigen Polyvinylalkohol stehen die stabil auf der Oberfläche verankerten Hydroxy- (-OH) Gruppen zur kovalenten Bindung von wasserlöslichen Substanzen über Ester- oder Acetal- oder Urethan- oder Etherbindungen zur Verfügung. Die Veresterung kann mit anorganischen oder organischen Säuren erfolgen. Beispielsweise kann man die -OH-Gruppen mit Di-, Tri- oder Polycarbonsäuren verestern, so dass die Material-oberfläche in wässriger Lösung negativ, anionisch geladen ist. Durch Veresterung mit Zwitterionen, z.B. Aminosäuren, bekommt die Oberfläche eine kationische, positive Ladung, die für weitere Reaktionen genutzt werden kann. Aldehydgruppen-haltige Verbindungen, wie zum Beispiel Glycerinaldehyd, lassen sich säure-katalysiert unter Ausbildung einer Acetalbindung an die -OH-Gruppen addieren, in diesem Falle erhöht sich die Anzahl an -OH-Gruppen auf der Materialoberfläche. Doppelbindungs-haltige Verbindungen, wie z.B. Vinylsulfonsäure, lassen sich peroxidisch-katalysiert unter Ausbildung von hydrolysestabilen Etherbindungen an die -OH-Gruppen addieren. In diesem Fall bekommt die Oberfläche, bei pH >2, durch die -SO₃⁻-Gruppen eine negative, anionische Ladung.

Diese zusätzlichen Oberflächen-modifikationen erweitern das Einsatzspektrum von derart oberflächen-modifizierten aus nieder-energetischen Kunststoffen hergestellten Partikeln in technischen Anwendungsbereichen einschließlich Anwendungen in Medizin, Umwelttechnik und Biotechnologie.

Die gemäß dem Verfahren oberflächen-modifizierten aus nieder-energetischen Kunststoffen hergestellten Partikel können zur Herstellung von Formkörpern durch oberflächennahe Wärmeentwicklung mittels elektromagnetischer Strahlung, z.B. mittels Mikrowelle, als Füllstoffe für Verbundmaterialien, als feuchtigkeits-bindendes Dämmmaterial, als Filtermaterialien, als Drainagematerial, als Substrate zur Immobilisierung biologisch aktiver Substanzen, als Zellkultursubstrate, als stromlos metallisierbare Substrate etc. eingesetzt werden.

In Hinblick auf erfindungsgemäße Verfahren ergeben sich aus der Oberflächenmodifikation eine verbesserte Benetzbarkeit mit Wasser. Die Erfinder gehen außerdem davon aus, dass unabhängig davon die vorhandenen funktionellen Gruppen die Absorptionsfähigkeit elektromagnetischer Strahlung an der Oberfläche verbessern. Dies führt insgesamt zu einer besseren Verschweißung.

Die örtlich an der Oberfläche der Partikel verbesserte Fähigkeit, elektromagnetische Strahlung zu absorbieren, ergibt sich jeweils aus der Struktur der Oberflächenmodifikation. Dort vorhandene funktionelle Gruppen (z.B. Estergruppe, Amidgruppe, Urethangruppe) bewirken ein Dipolmoment. Derartige funktionelle Gruppen sind für die Absorption von elektromagnetischer Strahlung, insbesondere Radiofrequenz-Strahlung, förderlich.

Schaumstoffpartikel auf Basis von Polyurethan (ePU), Polyether-Block-Amid (ePEBA), Polylactat (PLA), Polyamid (ePA), Polybutylenterephthalat (ePBT), Polyester-Ether-Elastomer (eTPEE) oder Polyethylenterephthalat (ePET) können grundsätzlich auch verwendet werden und diese Materialien absorbieren elektromagnetische Wellen gut. Diese Materialien, welche elektromagnetische Strahlung, insbesondere RF-Wellen, gut absorbieren, weisen jeweils eine funktionelle Gruppe (hier: Amidgruppe, Urethangruppe bzw. Estergruppe) auf, welche ein Dipolmoment bewirken. Diese funktionellen Gruppen sind dafür verantwortlich, dass die Moleküle die elektromagnetische Strahlung absorbieren. Daher sind auch andere thermoplastische Kunststoffe, welche derartige, ein Dipolmoment verursachende funktionelle Gruppen aufweisen, geeignet mit elektromagnetischer Strahlung, mittels RF-Wellen, erhitzt zu werden. Dasselbe gilt unabhängig von der Art der Schaumstoffpartikel auch für Beschichtungen, die derartige Gruppen aufweisen.

Die verbesserte Benetzbarkeit mit Wasser ergibt sich aus dem Vorhandensein polarer funktioneller Gruppen. Im Fall von Polyvinylalkohol sind dies Alkohol(-OH)-Gruppen, und gegebenenfalls im Polyvinylalkohol herstellungsbedingt noch vorhandene Acetatgruppen (Carbonsäureestergruppen). Hinzu kommen noch die Silanol- oder Carboxylgruppen im Fall des Einsatzes entsprechend modifizierter Polyvinylalkohole.

Erfindungsgemäße Verfahren sind Verfahren des Standes der Technik insoweit überlegen, als sie eine verbesserten und vor allem gleichmäßigeren Wärmeeintrag ermöglichen. Dies wird im Folgenden anhand der Ausführungsbeispiele näher erörtert.

### Beispiel 1:

Als Silanolgruppen-haltiger Polyvinylalkohol wird KURARAY POVAL^{™} R (neue Produktbezeichnung: KURARAY POVAL^{™} 25-98 R) der Firma Kuraray Europe GmbH, Hattersheim eingesetzt.

Zur Oberflächenmodifizierung wird eine 0,5%ige (w/v) wässrige KURARAY POVAL^{™} R-Lösung verwendet: Bei Raumtemperatur werden 5 g Polymer in 1.000 ml de-ionisiertes Wasser vorgelegt und dann unter ständigen Rühren auf ca. 90°C erwärmt bis sich das Polymer vollständig gelöst hat. Der pH wird mit verdünnter Salzsäure auf 3 eingestellt.

Partikel: ArmaShape. Hierbei handelt es sich um Partikel bzw. Hohlkügelchen aus Polyethylenterephthalat mit einem Durchmesser von <0,5 µm der Fa. Armacell Benelux S.A., Thimister-Clermont, Belgien.

Kontaktierung: Ca. 200 ml ArmaShape werden in ein Kunststoffsieb geschüttet. Das Sieb wird auf ein passendes Glas gesetzt und KURARAY POVAL^{™} R-Lösung wird solange auf die Kügelchen geschüttet bis diese aufschwimmen. Durch einen passenden Kunststoffdeckel werden sie dann in die Lösung zurückgedrückt. Die Kontaktierungszeit beträgt ca. 5 min.

Trocknung: Man lässt die Polymer-Lösung aus dem Sieb ablaufen, breitet die Kügelchen dann auf einer Glasplatte aus und trocknet sie bei ca. 70°C im Umluftofen.

Ergebnis: Mit KURARAY POVAL^{™} R-Lösung kontaktierte Kügelchen zeigen eine deutliche, nicht auswaschbare Färbung mit simplicol^{®} (ein Farbstoff zur Färbung von Baumwolle der Firma Brauns-Heitmann, Warburg) - unbehandelte Kontrollen binden keinen Farbstoff. Mit POVAL^{™} R-Lösung kontaktierte Kügelchen sind wasserbenetzbar.

### Beispiel 2:

Wie Beispiel 1, nur dass eine POVAL^{™} K-Lösung (neue Produktbezeichnung: KURARAY POVAL^{™} 25-88 KL) eingesetzt wird.

### Beispiel 3:

PET-Kügelchen werden wie in Beispiel 1 beschrieben oberflächen-modifiziert, mit Wasser angefeuchtet und im feuchten Zustand in eine Glasspritze gefüllt. Mit dem Spritzenstempel werden sie soweit komprimiert, bis kein Wasseraustritt aus der Spritze mehr erkennbar ist. Der Druck des Spritzenstempels auf die Kügelchen wird durch passende Klammern aufrecht erhalten. Diese Konstrukt wird 40 min lang der elektromagnetischen Energie einer Mikrowelle mit 600 Watt Leistung ausgesetzt. Nach Abkühlen lässt sich ein stabiler, dem Spritzeninnenraum entsprechender Formkörper aus zusammengebackenen PET-Kügelchen entnehmen.

### Beispiel 4:

Kügelchen bzw. Schaumstoffpartikel aus ePP der Fa. Kaneka werden wie in Beispiel 1 beschrieben oberflächen-modifiziert, mit Wasser angefeuchtet und im feuchten Zustand in eine Glasspritze gefüllt. Mit dem Spritzenstempel werden sie soweit komprimiert, bis kein Wasseraustritt aus der Spritze mehr erkennbar ist. Der Druck des Spritzenstempels auf die Kügelchen wird durch passende Klammern aufrecht erhalten. Diese Konstrukt wird 40 min lang der elektromagnetischen Energie einer Mikrowelle mit 600 Watt Leistung ausgesetzt. Nach Abkühlen lässt sich ein stabiler, dem Spritzeninnenraum entsprechender Formkörper aus zusammengebackenen bzw. verschweißten ePP-Kügelchen entnehmen.

### Beispiel 5:

Schaumstoffpartikel aus EPP der Fa. Kaneka bzw. EPS der Firmen BASF und Knauf werden in einem Test-Formgebungswerkzeug mittels elektromagnetischen Wellen unter verschiedenen Bedingungen miteinander verschweißt, und zwar:
- Benetzt mit destilliertem Wasser (als Vergleichsbeispiel);
- mit PVA (1% (w/v) in Wasser) beschichtet in Anwesenheit von Wasser (erfindungsgemäß);
- mit Polyethylenglykol in Anwesenheit von Wasser (als Vergleichsbeispiel).

Als PVA wurde KURARAY POVAL^{™} R-Lösung (neue Produktbezeichnung: KURARAY POVAL^{™} 25-98 R) in Form einer 1%igen (w/v) wässrigen Lösung verwendet, d.h. ein Silanolgruppen aufweisender Polyvinylalkohol.

Jedes Experiment wird fünfmal wiederholt. Die über einen immergleichen Zeitraum von ca. 22 Sekunden angelegte Versorgungsspannung für die Frequenzerzeugung beträgt ca. 6,5 kV. Der Formgebungsraum ist so geformt, dass als Test-Formteil eine quaderförmige Schaumstoffplatte mit den Maßen 100 mm x 100 mm x 25 mm gebildet wird. Das Test-Formgebungswerkzeug bzw. die es tragende Vorrichtung ist mit einem optischen Temperatursensor versehen, der die Oberflächentemperatur des Werkstücks aus zu verschweißenden bzw. verschweißten Schaumstoffpartikeln erfasst. Zugleich ist in der Wandung der Form ein Sensor enthalten, der den Schaumdruck, also den Druck in der Form, erfasst. Außerdem ist im Stromkreis eine Messvorrichtung enthalten, welche die elektrische Leistung, die am Kondensator in Form der Strahlung abgegeben wird, misst. Dies entspricht der Leistung der durch die Schaumstoffpartikel beim Verschweißen aufgenommenen Strahlung.

Die jeweils aufgenommene maximale Leistung spiegelt die Absorptionsfähigkeit des untersuchten Materials wieder. Je höher die gemessene maximale Leistung, desto höher ist die Absorptionsfähigkeit des untersuchten Materials. Die Energie entspricht dem Integral unter der Zeit-Leistungskurve und gibt die absorbierte Strahlungsenergie wieder.

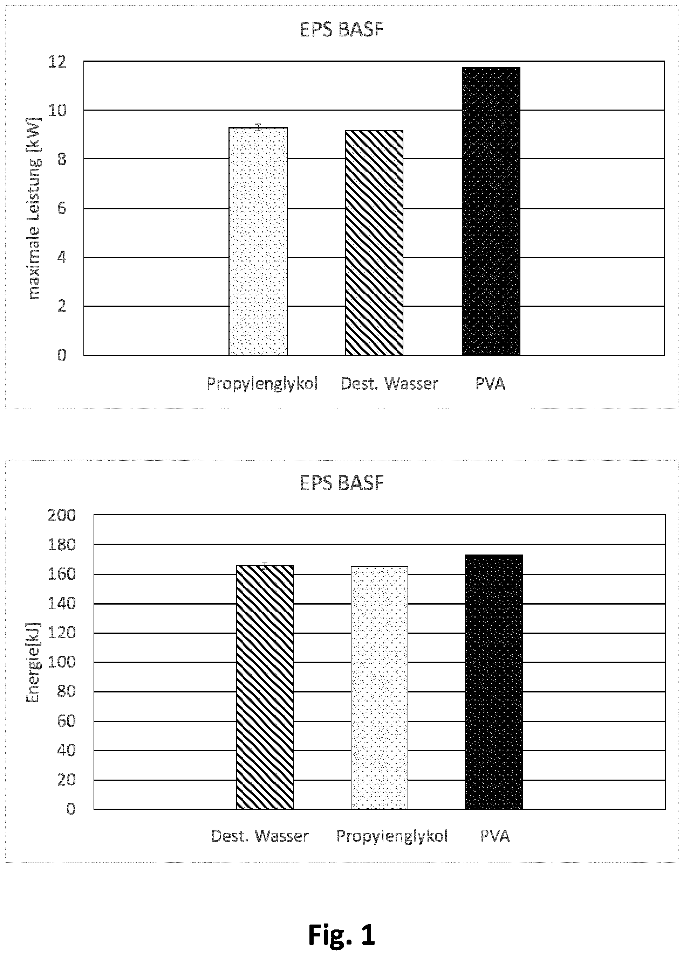

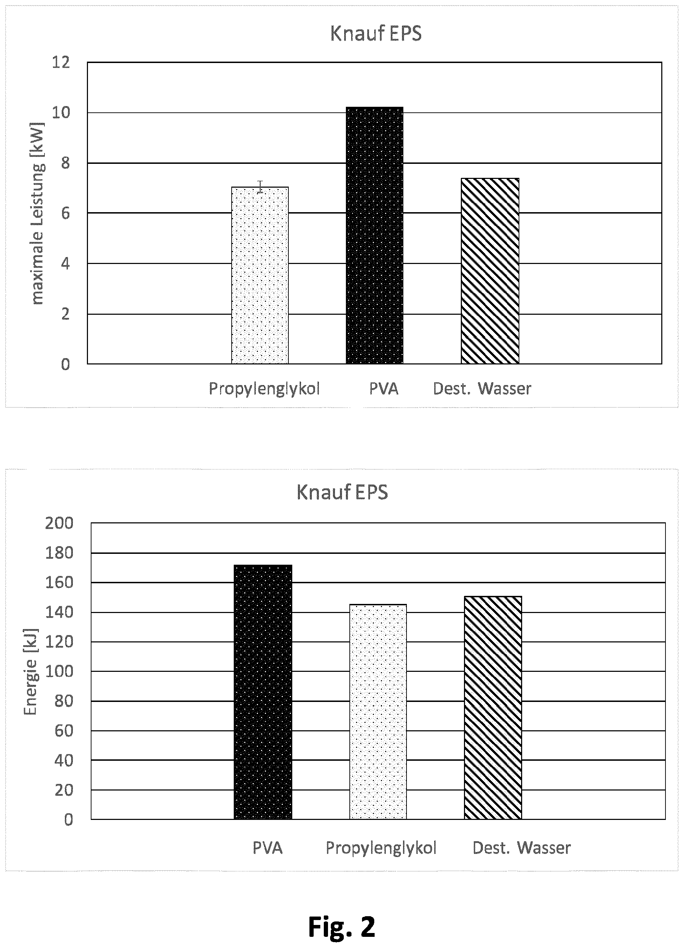

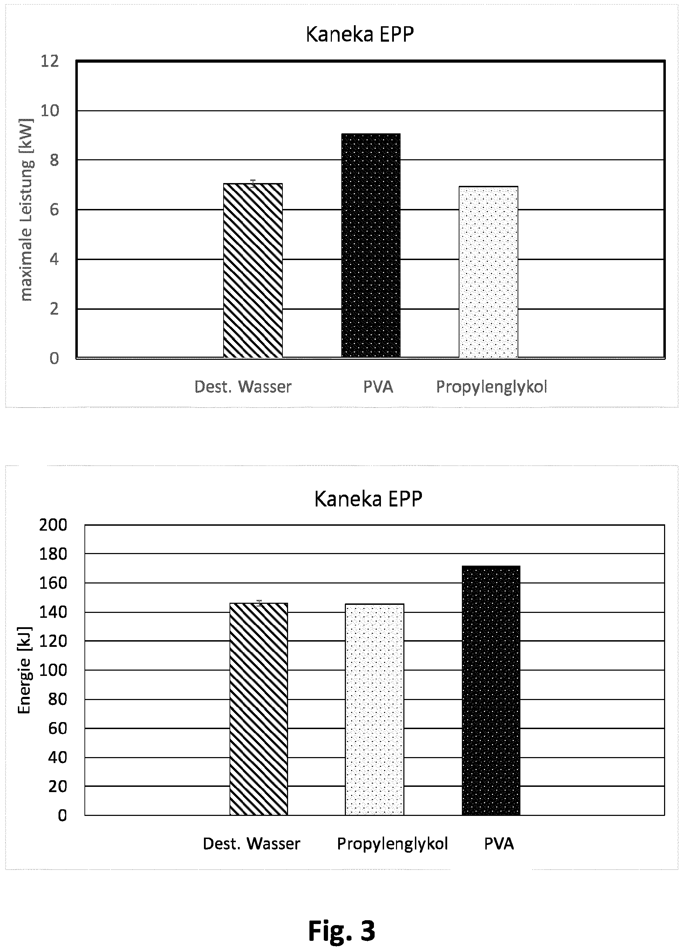

Die Ergebnisse sind in den Balkendiagrammen der Figuren 1 bis 3 wiedergegeben. Darin ist jeweils die maximale Leistung als auch die aufgenommene Energie für die drei verschiedenen Behandlungsarten angegeben. Figur 1 fasst die Ergebnisse für die Schaumpartikel aus EPS der Fa. BASF zusammen, Figur 2 für die Schaumpartikel aus EPS der Fa. Knauf und Figur 3 für die Schaumpartikel aus EPP der Fa. Kaneka.

Es ergibt sich daraus, dass destilliertes Wasser (jeweils farblos) und Polyethylenglykol (jeweils grau) jeweils nahezu gleich schlechte Wärmeübertragungsmedien sind, da die jeweils maximal aufgenommene Leistung und umgesetzte Energie bei mit destilliertem Wasser oder Polyethylenglykol behandelten Schaumstoffpartikeln im Vergleich zu mit PVA behandelten Partikeln (jeweils schwarz) deutlich geringer ausfallen.

### Ergänzende Angaben

Im vorstehenden Beispiel 5 wurde auf eine Entfernung des Lösungsmittels bei der Herstellung der Beschichtung mit PVA verzichtet. Die mit Oberflächenmodifikationslösung versehenen Partikel wurde zusätzlich mit der gleichen Menge Wasser versetzt (je 14 g Wasser und 14 g Oberflächenmodifikationslösung wurden verwendet).

Um ein mögliches Auspolymerisieren von Polymer-Lösung, z.B. PVA-Lösung, und somit ein mögliches Anhaften oder Verkleben an Werkzeugoberflächen zu vermeiden, können Schaumpartikel nach Herstellung der Oberflächenmodifikation von Lösungsmittel befreit, also getrocknet werden, und anschließend in der Formgebungsvorrichtung mit Wasser benetzt werden.

Sofern eine Entfernung des Lösungsmittels im Sinne einer Trocknung nicht vorgesehen ist, kann überschüssige Oberflächenmodifikations-Lösung durch Zentrifugation beispielsweise in einem Rohrtrommelsieb derart entfernt werden, dass nur die zum Verschweißen erforderliche (Minimal)Menge an Oberflächenmodifikations-Lösung auf der Oberfläche der Partikel zurück bleibt.

Die vorstehenden Erörterungen dienen der Erläuterung der Erfindung und sind nicht einengend auszulegen.

Die Oberflächenmodifikation kann auch erfolgen durch:
- Verfahren zur Oberflächenmodifizierung von aus nieder-energetischen Kunststoffen hergestellten Partikeln, dadurch gekennzeichnet, dass man die Partikel mit einer Lösung, die Polymere enthält, die zur Ausbildung von kovalenten inter- und intramolekularen Bindungen befähigt sind, bei den hierzu erforderlichen Bedingungen kontaktiert und das Lösemittel wieder entfernt.
- ebensolche Verfahren, dadurch gekennzeichnet, dass man wässrige Lösungen von Carboxyl- oder Silanolgruppen-haltigem Polyvinylalkohol bei pH 3 ± 1 einsetzt.

Erfindungsgemäße, aus nieder-energetischen Kunststoffen hergestellte Partikel können dadurch gekennzeichnet sein, dass sie durch vorgenannte Verfahren oberflächen-modifiziert wurden. Solche erfindungsgemäßen Partikel können als Substrate zur kovalenten Bindung von (vorwiegend) wasserlöslichen Substanzen über Ester-, Urethan-, Acetal- oder Etherbindungen dienen.

Die aus nieder-energetischen Kunststoffen hergestellten und wie in den vorstehenden beiden Absätzen oberflächen-modifizierten Partikel können als Substrat zur Herstellung von Formkörpern durch oberflächennahe Wärmeentwicklung, z.B. mittels Mikrowelle, als feuchtigkeits-bindendes Dämmmaterial, als Füllstoffe für Verbundmaterialien, als Filtermaterialien, als Drainagematerial, als Substrate zur Immobilisierung biologisch aktiver Substanzen, als Zellkultursubstrate, als stromlos metallisierbare Substrate etc. eingesetzt verwendet werden.

## Patentansprüche

1. Verfahren zum Verschweißen von Schaumstoffpartikeln mit elektromagnetischen Wellen, wobei
Schaumstoffpartikel mit einer Oberflächenmodifikation in einem Formwerkzeug mit elektromagnetischen Wellen verschweißt werden,
wobei
die Oberflächenmodifikation dadurch hergestellt wird, dass die Schaumstoffpartikel mit einer Lösung, die Polymere enthält, die zur Ausbildung von intra- oder intermolekularen kovalenten Bindungen befähigt sind, kontaktiert werden,
und wobei
die zur Ausbildung von intra- oder intermolekularen kovalenten Bindungen befähigten Polymere funktionelle Gruppen aufweisen, ausgewählt aus Sulfonsäure-, Thio-, Ammonium-, Carboxyl- bzw. Silanolgruppen, die Bestandteil von Polyvinylalkohol, Polyvinylpyrrolidon sind.

2. Verfahren nach Anspruch 1, wobei die Oberflächenmodifikation hydrophil ist.

3. Verfahren nach Anspruch 1 oder 2, wobei die Schaumstoffpartikel mit Oberflächenmodifikation mit einer wässrigen Lösung benetzt werden, bevor sie in dem Formwerkzeug mit elektromagnetischen Wellen verschweißt werden.

4. Verfahren nach der vorhergehenden Ansprüche, wobei die Herstellung der Oberflächenmodifikation als zusätzlichen Schritt die Entfernung des hierbei verwendeten Lösungsmittels umfasst.

5. Verfahren nach einem der vorhergehenden Ansprüche, wobei die Oberflächenmodifikation zur Verbesserung der Absorption elektromagnetischer Strahlen insbesondere im Radiofrequenzbereich polare Gruppen aufweist.

6. Verfahren nach Anspruch 5, **dadurch gekennzeichnet, dass** die polaren Gruppen ausgewählt sind aus Ester-, Acetal- oder Urethangruppe.

7. Verfahren nach Anspruch einem der vorhergehenden Ansprüche, wobei die Schaumstoffpartikel mit einer Oberflächenmodifikation versehen werden, indem sie mit einer wässerigen Carboxyl- oder Silanolgruppen-haltigen Polyvinylalkohol-Lösung kontaktiert werden wobei der pH-Wert der wässerigen Carboxyl- oder Silanolgruppen-haltigen Polyvinylalkohol-Lösung zwischen 2 und 5 liegt, und wobei die wässerige Carboxyl- oder Silanolgruppen-haltigen Polyvinylalkohol-Lösung gegebenenfalls weitere Substanzen, die die Oberflächenspannung und/oder die Viskosität der Lösung beeinflussen, umfasst.

8. Verfahren nach Anspruch 7,
**dadurch gekennzeichnet, dass** die Konzentration der Carboxyl- oder Silanolgruppen-haltigen Polyvinylalkohol-Lösung 0,001 % (w/v) bis 40 % (w/v), 0,01% (w/v) bis 10% (w/v), 0,5 bis 2% (w/v), oder 1% (w/v) beträgt.

9. Verfahren nach einem der vorhergehenden Ansprüche, wobei die resultierende Oberflächenmodifizierung durch kovalente Bindung von wasserlöslichen Substanzen an die dort vorhandenen Hydroxy(-OH)gruppen mittels Ester-, Acetal-, Urethan- oder Etherbindung weiter modifiziert ist.

10. Verfahren nach einem der vorhergehenden Ansprüche, wobei die Schaumstoffpartikel aus Polyurethan bestehen, oder aus expandierbaren Thermoplasten auf Basis von Polyether-Block-Amid (ePEBA), auf Basis von Polylactat (PLA), auf Basis von Polyamid (ePA), auf Basis von Polybutylenterephthalat (ePBT), auf der Basis von Polyester-Ether-Elastomer (eTPEE), auf Basis von Polyethylenterephtalat (ePET), oder aus expandierbarem Polyethylen (ePE), expandierbarem Polypropylen (ePP) oder expandierbarem Polystyrol (ePS).

## Claims

1. A method for welding foam particles using electromagnetic waves, wherein
foam particles undergoing a surface modification are welded in a molding tool using electromagnetic waves,
wherein
the surface modification is produced by the foam particles being brought into contact with a solution containing polymers which are capable of forming intramolecular or intermolecular covalent bonds,
and wherein
the polymers capable of forming intramolecular or intermolecular covalent bonds comprise functional groups selected from sulfonic acid, thio, ammonium, carboxyl or silanol groups which are part of polyvinyl alcohol or polyvinylpyrrolidone.

2. The method according to claim 1, wherein the surface modification is hydrophilic.

3. The method according to claim 1 or 2, wherein the foam particles with surface modification are wetted with an aqueous solution before they are welded in the molding tool using electromagnetic waves.

4. The method according to any of the preceding claims, wherein the production of the surface modification comprises, as an additional step, the removal of the solvent used in this method.

5. The method according to any of the preceding claims, wherein the surface modification for improving the absorption of electromagnetic radiation, in particular in the radiofrequency range, comprises polar groups.

6. The method according to claim 5, **characterized in that** the polar groups are selected from an ester, acetal or urethane group.

7. The method according to any of the preceding claims, wherein the foam particles are provided with a surface modification by contacting them with an aqueous carboxyl- or silanol group-containing polyvinyl alcohol solution, wherein the pH value of the aqueous carboxyl- or silanol group-containing polyvinyl alcohol solution is between 2 and 5, and wherein the aqueous carboxyl- or silanol group-containing polyvinyl alcohol solution optionally comprises further substances which affect the surface tension and/or the viscosity of the solution.

8. The method according to claim 7, **characterized in that** the concentration of the carboxyl or silanol group-containing polyvinyl alcohol solution is 0.001% (w/v) to 40% (w/v), 0.01% (w/v) to 10% (w/v), 0.5 to 2% (w/v), or is 1% (w/v).

9. The method according to any of the preceding claims, wherein the resulting surface modification is further modified by covalent bonding of water-soluble substances to the hydroxy (-OH) groups present there by means of an ester, acetal, urethane or ether bond.

10. The method according to any of the preceding claims, wherein the foam particles are made of polyurethane or of expandable thermoplastics on the basis of polyether block amide (ePEBA), on the basis of polylactate (PLA), on the basis of polyamide (ePA), on the basis of polybutylene terephthalate (ePBT), on the basis of polyester-ether-elastomer (eTPEE), on the basis of polyethylene terephthalate (ePET), or are made of expandable polyethylene (ePE), expandable polypropylene (ePP) or expandable polystyrene (ePS).

## Revendications

1. Procédé de soudage de particules de mousse à l'aide d'ondes électromagnétiques, sachant que
des particules de mousse subissant une modification de surface sont soudées dans un outil de moulage à l'aide d'ondes électromagnétiques,
sachant que
la modification de surface est produite par la mise en contact des particules de mousse avec une solution contenant des polymères capables de former des liaisons covalentes intramoléculaires ou intermoléculaires,
et sachant que
les polymères capables de former des liaisons covalentes intramoléculaires ou intermoléculaires comprennent des groupes fonctionnels choisis parmi les groupes acide sulfonique, thio, ammonium, carboxyle ou silanol qui font partie de l'alcool polyvinylique ou de la polyvinylpyrrolidone.

2. Le procédé selon la revendication 1, sachant que la modification de surface est hydrophile.

3. Le procédé selon la revendication 1 ou 2, sachant que les particules de mousse subissant une modification de surface sont mouillées avec une solution aqueuse avant d'être soudées dans l'outil de moulage à l'aide d'ondes électromagnétiques.

4. Le procédé selon l'une quelconque des revendications précédentes, sachant que la production de la modification de surface comprend, en tant qu'étape supplémentaire, l'élimination du solvant utilisé ici.

5. Le procédé selon l'une quelconque des revendications précédentes, sachant que la modification de surface, destinée à améliorer l'absorption du rayonnement électromagnétique en particulier dans le domaine des radiofréquences, comprend des groupes polaires.

6. Le procédé selon la revendication 5, **caractérisé en ce que** les groupes polaires sont choisis parmi un groupe ester, acétal ou uréthane.

7. Le procédé selon l'une quelconque des revendications précédentes, sachant que les particules de mousse subissent une modification de surface en les mettant en contact avec une solution aqueuse d'alcool polyvinylique contenant des groupes carboxyle ou silanol, le pH de la solution aqueuse d'alcool polyvinylique contenant des groupes carboxyle ou silanol étant compris entre 2 et 5, et la solution aqueuse d'alcool polyvinylique contenant des groupes carboxyle ou silanol comprenant éventuellement d'autres substances qui influencent la tension superficielle et/ou la viscosité de la solution.

8. Le procédé selon la revendication 7, **caractérisé en ce que** la concentration de la solution d'alcool polyvinylique contenant des groupes carboxyle ou silanol est de 0,001 % (p/v) à 40 % (p/v), de 0,01 % (p/v) à 10 % (p/v), de 0,5 à 2 % (p/v), ou est égale à 1 % (p/v).

9. Le procédé selon l'une quelconque des revendications précédentes, sachant que la modification de surface résultante est encore modifiée par liaison covalente de substances solubles dans l'eau aux groupes hydroxy (-OH) présents ici au moyen d'une liaison ester, acétal, uréthane ou éther.

10. Le procédé selon l'une quelconque des revendications précédentes, sachant que les particules de mousse sont constituées de polyuréthane ou de thermoplastiques expansibles à base de polyéther bloc amide (ePEBA), à base de polylactate (PLA), à base de polyamide (ePA), à base de polybutylène téréphtalate (ePBT), à base de polyester-éther-élastomère (eTPEE), à base de polyéthylène téréphtalate (ePET), ou de polyéthylène expansible (ePE), de polypropylène expansible (ePP) ou de polystyrène expansible (ePS).
